# EUROPÄISCHE PATENTSCHRIFT

(11) **EP 2 735 653 B1**
(45) Veröffentlichungstag und Bekanntmachung des Hinweises auf die Patenterteilung: **10.02.2016**
(21) Anmeldenummer: 12194220.5
(22) Anmeldetag: 26.11.2012
(51) Int. Cl.: E01F 13/06

(54) **Formschlüssige Verbindung mit Abbruchfunktion in einer Richtung zwischen zwei Bauteilen**
Positive connection with disconnection function in one direction between two components
Liaison par complémentarité de forme avec fonction de rupture dans un sens entre deux composants

(43) Veröffentlichungstag der Anmeldung: 28.05.2014
(73) Patentinhaber: SKIDATA AG, 5083 Grödig/Salzburg (AT)
(72) Erfinder: Schieren, Jürgen, 80637 München (DE)
(74) Vertreter: Karakatsanis, Georgios

(56) Entgegenhaltungen:
- EP-A1- 2 085 631
- DE-U1-202011 109 975
- GB-A- 1 145 552
- JP-A- H1 120 700
- US-A- 3 602 057
- US-A- 4 030 745
- US-A1- 2002 152 683
- US-A1- 2007 199 243

## Beschreibung

Die vorliegende Erfindung bezieht sich auf eine formschlüssige Verbindung mit Abbruchfunktion in einer Richtung zwischen zwei Bauteilen gemäß dem Oberbegriff des Patentanspruchs 1. Insbesondere bezieht sich die Erfindung auf eine formschlüssige Verbindung zwischen einem entlang einer definierten Länge in einer Aufnahme einer Schrankenkopfscheibe angeordneten Schrankenbaum einer Fahrzeugschranke und der Schrankenkopfscheibe, welche im Bereich des Schrankenkopfs einer Schrankensäule einer Fahrzeugschranke mit der Schrankenbaumwelle direkt oder über ein Getriebe drehfest verbunden ist, entlang einer Achse senkrecht zur Schwenkachse des Schrankenbaums im montierten Zustand und in der der Schrankenkopfscheibe abgewandten Richtung.

Aus dem Stand der Technik ist bekannt, den Schrankenbaum einer Fahrzeugschranke mit einer Schrankenkopfscheibe, welche wiederum mit einer Schrankenbaumwelle einer Wahrzeugschranke direkt oder über ein Getriebe drehfest verbunden ist, formschlüssig zu verbinden, wobei zu diesem Zweck der Schrankenbaum in einer länglichen Aufnahme der Schrankenkopfscheibe angeordnet ist, wodurch eine formschlüssige, drehfeste Verbindung zwischen der Schrankenkopfscheibe und dem Schrankenbaum in Verschwenkrichtung des Schrankenbaums realisiert wird.

Um eine Verbindung der Schrankenbaumscheibe mit dem Schrankenbaum in Richtung parallel zur Schwenkachse des Schrankenbaums zu realisieren, werden in der Regel kraftschlüssige Verbindungselemente mit Abbruchfunktion verwendet; vorzugsweise sind die kraftschlüssigen Verbindungselemente als Abbruchschrauben ausgeführt, welche bei einer Kraftkomponente senkrecht zur Verschwenkrichtung des Schrankenbaums, die einen vorgegebenen Wert überschreitet, abbrechen und somit den Abwurf des Schrankenbaumes ermöglichen, wodurch Beschädigungen am Schrankenbaum und am Fahrzeug vermieden werden sollen.

Diese Konzeption weist jedoch den Nachteil auf, dass die Abbruchschrauben bei der Montage der Fahrzeugschranke in der Regel so weit wie möglich eingedreht bzw, festgezogen werden, so dass im montierten Zustand der Fahrzeugschranke die Abbruchschrauben bereits stark vorbelastet sind. Dadurch besteht die Gefahr, dass die formschlüssige Verbindung in Richtung senkrecht zur Verschwenkachse des Schrankenbaums bereits bei geringeren Kräften in einer der Schrankenkopfscheibe abgewandten Richtung aufgelöst wird, was zu einer Beeinträchtigung des Betriebs der Fahrzeugschranke führt. Im umgekehrten Falle einer zu vorsichtigen Schraubenfixierung kommt es zu einer ungenügenden Befestigung des Baumes. Letztendlich liegen daher die erforderlichen Momente für ein Brechen der Schrauben in einem weiten Toleranzbereich und die Abbruchfunktion läuft Gefahr unzuverlässig zu wirken.

Aus der GB 1145552 A ist eine Schwenktür bekannt, bei der zur Vermeidung einer Beschädigung der Tür bei übermäßiger Belastung in ein Scharnier ein Scherbolzen angeordnet ist, welcher der mit beiden Enden in Buchsen des Scharniers aufgenommen ist.

Aus der EP 2 085 631 A1 gehen eine Drehmomentschutzvorrichtung und eine Drehmomentübertragungsanordnung hervor, bei denen Scherbolzen verwendet werden, wobei ein Ende der Scherbolzen mit dem antreibenden Bauteil und das andere Ende mit dem angetriebenen Bauteil starr verbunden sind.

Ferner geht aus der US 2002/0152683 A1 eine Schranke hervor, bei der eine Abbruchfunktion mittels mehrerer Scherbolzen realisiert ist, welche die Schranke mit einer mit der Schrankensäule verbundene Platte gelenkig verbinden.

Der vorliegenden Erfindung liegt die Aufgabe zugrunde, eine formschlüssige Verbindung mit Abbruchfunktion in einer Richtung zwischen zwei Bauteilen anzugeben, bei der eine Vorbelastung der Verbindungselemente, welche sowohl der formschlüssigen Verbindung als auch der Abbruchfunktion dienen, vermieden wird. Zudem soll nach erfolgtem Abbruch der Verbindung die formschlüssige Verbindung zwischen den Bauteilen möglichst schnell und auf einfache und kostengünstige Weise wiederherstellbar sein.

Für den Fall einer formschlüssigen Verbindung zwischen einem entlang einer definierten Länge in einer Aufnahme einer Schrankenkopfscheibe angeordneten Schrankenbaum einer Fahrzeugschranke und der Schrankenkopfscheibe, ist es in einigen Ländern erforderlich, dass beim Abbruch ein Bauteil beschädigt wird, um den Verursacher des Schrankenbaumabbruchs rechtlich belangen zu können. Außerdem spielen die Kosten für die fest montierten Komponenten und für die austauschbaren, zu Bruch gehenden Komponenten eine entscheidende Rolle. Da die zu Bruch gehenden Komponenten im Feld, im laufenden Parkbetrieb gewechselt bzw. erneuert werden müssen, muss dieser Wechsel möglichst schnell und einfach erledigt werden können.

Diese Aufgabe wird durch die Merkmale des Patentanspruchs 1 gelöst. Weitere erfindunggemäße Ausgestaltungen und Vorteile gehen aus den Unteransprüchen hervor.

Demnach wird eine formschlüssige Verbindung mit Abbruchfunktion in einer Richtung zwischen zwei Bauteilen vorgeschlagen, welche zumindest ein als Scherbolzen ausgeführtes Verbindungselement aufweist, welches mit dem ersten zu verbindenden Bauteil formschlüssig verbunden ist, wobei das Ende des Scherbolzens über ein in Richtung der herzustellenden formschlüssigen Verbindung elastisch ausgeführtes und mit dem zweiten zu verbindenden Bauteil verbundenes Bauteil mit dem zweiten zu verbindenden Bauteil in Richtung der herzustellenden formschlüssigen Verbindung formschlüssig wirkverbunden ist.

Hierbei befindet sich der zumindest eine Scherbolzen bei hergestellter formschlüssiger Verbindung mit dem ersten zu verbindenden Bauteil in einer Arretierungsposition, wobei bei hergestellter formschlüssiger Wirkverbindung zwischen dem Scherbolzen und dem zweiten zu verbindenden Bauteil der Scherbolzen durch die Kraft des elastisch ausgeführten Bauteiles in der Arretierungsposition sicher gehalten wird.

Das elastisch ausgeführte Bauteil kann als Blattfeder oder Zentralfeder oder als Elastomer ausgeführt sein.

Für den Fall der formschlüssigen Verbindung eines entlang einer definierten Länge in einer Aufnahme einer Schrankenkopfscheibe angeordneten Schrankenbaums mit der Schrankenkopfscheibe entlang einer Achse senkrecht zur Schwenkachse des Schrankenbaums im montierten Zustand und in der der Schrankenkopfscheibe abgewandten Richtung, ist der zumindest eine Scherbolzen vorzugsweise entweder mit dem Schrankenbaum direkt formschlüssige verbunden oder mit einem den Schrankenbaum entlang einer definierten Länge entlang der Längsachse umschließenden Bauteil formschlüssig verbunden. Alternativ kann der zumindest eine Scherbolzen mit der Schrankenkopfscheibe formschlüssig verbunden sein, wobei das elastisch ausgeführte Bauteil mit dem Schrankenbaum bzw. mit dem den Schrankenbaum entlang einer definierten Länge entlang der Längsachse umschließenden Bauteil verbunden ist.

Erfindungsgemäß erfolgt die formschlüssige Verbindung zwischen dem Scherbolzen und dem ersten zu verbindenden Bauteil derart, dass sich der Scherbolzen bei hergestellter formschlüssiger Verbindung mit dem ersten zu verbindenden Bauteil in einer Arretierungsposition befindet, wobei bei hergestellter formschlüssiger Wirkverbindung zwischen dem Scherbolzen und dem zweiten zu verbindenden Bauteil über das elastisch ausgeführte Bauteil der Scherbolzen durch die elastische Kraft des elastisch ausgeführten Bauteils in der Arretierungsposition gehalten wird.

Der Scherbolzen ragt im montierten Zustand aus dem ersten zu verbindenden Bauteil heraus, wobei über das Ende des Scherbolzens die formschlüssige Wirkverbindung in der gewünschten Richtung mit dem zweiten zu verbindenden Bauteil hergestellt wird; die Sollbruchstelle des Scherbolzens ist nach erfolgter Verbindung axial betrachtet nach dem letzten Berührungspunkt mit dem ersten zu verbindenden Bauteil vorgesehen.

Dadurch, dass der Scherbolzen im montierten Zustand mit dem zweiten zu verbindenden Element in der gewünschte Richtung über das elastisch ausgeführte Bauteil formschlüssig wirkverbunden ist, stellt das elastisch ausgeführte Bauteil ein Kraftbegrenzungselement in Richtung auf die Sollbruchstelle dar.

Erfindungsgemäß weist der Scherbolzen einen T-förmigen Kopf auf, der zum formschlüssigen Zusammenwirken mit dem ersten zu verbindenden Bauteil geeignet ist, wobei zumindest ein Ende des Bolzenkopfes ein Formelement zum formschlüssigen Verbinden mit einem Werkzeug zum Drehen des Scherbolzens in Richtung senkrecht zur Längsachse des Bolzenkopfes aufweist.

Die formschlüssige Verbindung des Scherbolzens mit dem ersten zu verbindenden Element erfolgt derart, dass der Scherbolzen mit einem der Enden des Kopfes voran in eine Aufnahme des ersten zu verbindenden Bauteils eingeführt wird, wobei anschließend der Scherbolzen mittels eines Werkzeugs um die Längsachse des Bolzenkopfs gedreht wird, um den Scherbolzen in die Arretierungsposition zu bewegen. Vorzugsweise wird hierbei der Bolzen entlang einer Schraubenlinie bzw. Rampe bis zur Arretierungsposition gedreht. Die Schraubenlinie ist so gestaltet, dass während der Drehung des Scherbolzens das elastisch ausgeführte Bauteil mit steigender Kraft vorgespannt wird, so dass in der Arretierungsposition der Scherbolzen sicher gehalten werden kann.

Die Erfindung wird im Folgenden anhand der beigefügten Figuren am Beispiel einer formschlüssigen Verbindung zwischen einem entlang einer definierten Länge in einer Aufnahme einer Schrankenkopfscheibe angeordneten Schrankenbaum einer Fahrzeugschranke und der Schrankenkopfscheibe entlang einer Achse senkrecht zur Schwenkachse des Schrankenbaums im montierten Zustand und in der der Schrankenkopfscheibe abgewandten Richtung, näher erläutert. Gleiche Bezugszeichen bezeichnen gleiche Bauteile. Es zeigen:
- Fig. 1:: eine Explosionsdarstellung eines Teiles eines Schrankenbaums und des den Schrankenbaum entlang einer definierten Länge entlang der Längsachse umschließenden Bauteils, welches aus zwei Halbscheiben gebildet ist und erste zu verbindende Bauteil im Sinne der Erfindung bildet;
- Fig. 2:: eine perspektivische Ansicht des in Figur 1 gezeigten Teils des Schrankenbaums und des mit dem Schrankenbaum verbundenen ersten Bauteils sowie der erfindungsgemäßen Scherbolzen;
- Fig. 3:: perspektivische Ansichten der Vorder- und der Rückseite der mit dem Schrankenbaum zu verbindenden Schrankenbaumscheibe;
- Fig. 4:: eine perspektivische Ansicht der Schrankenbaumscheibe und des in Figur 2 gezeigten Teils des Schrankenbaums vor der Montage;
- Fig. 5:: eine Draufsicht der Vorderseite der Schrankenbaumscheibe und des in Figur 2 gezeigten Teils des Schrankenbaums im montierten Zustand;
- Fig. 6:: eine Draufsicht der Rückseite der Schrankenkopfscheibe und des in Figur 2 gezeigten Teils des Schrankenbaums im montierten Zustand;
- Fig. 7:: eine Schnittansicht entlang der Linie A-A aus Figur 6; und
- Fig. 8:: eine Detailansicht des Bereichs B aus Figur 7.

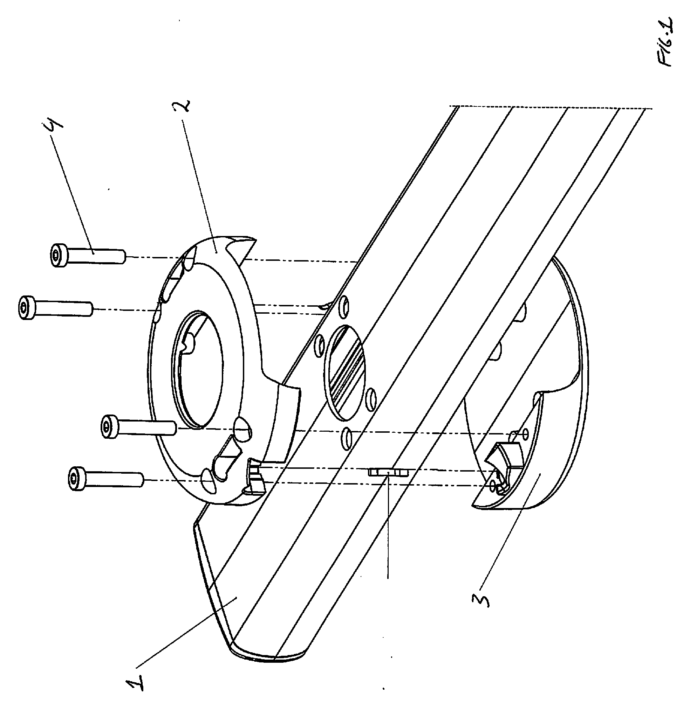

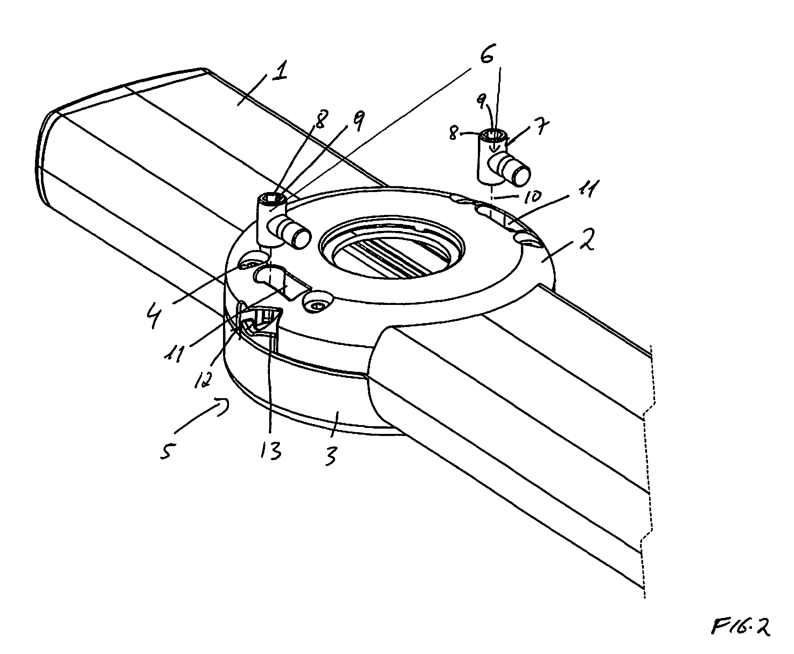

In Figur 1 ist das der Schrankensäule einer Fahrzeugschranke zugewandte Ende eines Schrankenbaums 1 dargestellt. Des Weiteren sind zwei Halbscheiben 2, 3 dargestellt, die mittels Befestigungsmittel, beispielsweise Schrauben 4, derart miteinander verbindbar sind, dass sie den Schrankenbaum 1 entlang einer definierten Länge entlang der Längsachse umschließen. Das aus den zwei Halbscheiben 2, 3 bestehende Bauteil 5 bildet hierbei das erste zu verbindende Bauteil im Sinne der Erfindung und ist in Figur 2 dargestellt. Die zwei Halbscheiben 2, 3 werden vorzugsweise durch Gießen oder Spritzgießen hergestellt. Bei dem gezeigten Beispiel ist die obere Halbscheibe 2 die nach der Montage der Schrankenkopfscheibe zugewandte Halbscheibe.

Gemäß der Erfindung weist die formschlüssige Verbindung mit Abbruchfunkion zwischen zwei Bauteilen in einer Richtung zumindest ein als Scherbolzen ausgeführtes Verbindungselement auf, welches mit dem ersten zu verbindenden Bauteil formschlüssig verbunden ist, wobei das Ende des Scherbolzens über ein in die Richtung der herzustellenden formschlüssigen Verbindung elastisch ausgeführtes und mit dem zweiten zu verbindenden Bauteil verbundenes Bauteil mit dem zweiten zu verbindenden Bauteil in Richtung der herzustellenden formschlüssigen Verbindung formschlüssig wirkverbunden ist.

Bei dem gezeigten Beispiel ist das erste zu verbindende Bauteil das aus den zwei Halbscheiben 2, 3 bestehende Bauteil 5, welches wiederum mit dem Schrankenbaum 1 verbunden ist, wobei die erfindungsgemäße formschlüssige Verbindung eine Verbindung des ersten zu verbindenden Bauteils 5 mit einer das zweite zu verbindende Bauteil darstellenden Schrankenkopfscheibe entlang einer Achse senkrecht zur Schwenkachse des Schrankenbaums im montierten Zustand und in der der Schrankenkopfscheibe abgewandten Richtung ist. Die Schrankenkopfscheibe ist im Bereich des Schrankenkopfs einer Schrankensäule einer Fahrzeugschranke mit der angetriebenen Schrankenbaumwelle direkt oder über ein Getriebe drehfest verbunden. Die benötigten Scherbolzen sind in Figur 2 dargestellt und mit dem Bezugszeichen 6 versehen. Im montierten Zustand, der anhand Figur 2 veranschaulicht ist, werden durch die zwei Halbscheiben 2, 3 zwei diametral entgegengesetzt angeordnete Aufnahmen 11 sowie Schraubenlinien bzw. Rampen 13 zur Aufnahme von jeweils einem Scherbolzen 6 gebildet.

Bezugnehmend auf Figur 2 weisen die zwei benötigten Scherbolzen 6 einen T-förmigen Bolzenkopf 7 auf, der zum formschlüssigen Zusammenwirken mit dem ersten zu verbindenden Bauteil 5 geeignet ist. Ferner weist zumindest ein Ende 8 des Bolzenkopfes 7 ein Formelement 9 zum formschlüssigen Verbinden mit einem Werkzeug, beispielsweise mit einem Inbusschlüssel oder einem Schraubenzieher zum Drehen des Scherbolzens in Richtung senkrecht zur Längsachse 10 des Bolzenkopfes 7 auf.

Die Auswahl des Materials der Scherbolzen 6 spielt bei dieser Konstruktion eine zentrale Rolle, da die Bruchfestigkeit des Materials, das Bruchverhalten (Sprödbruch nach Überschreiten einer ggf. durch eine Sollbruchstelle definierten Kraft statt duktiler Bruch nach größerer plastischer Deformation) und die Außeneinsatzfähigkeit in sämtlichen klimatischen Zonen über mehrere Jahre ohne eine signifikante Änderung der Materialeigenschaften von besonderer Bedeutung sind.

Die erforderliche Kraft zum Abbruch der Scherbolzen 6 muss in dem Fenster zwischen Starkwindangriff am Schrankenbaum, bei dem sie noch nicht brechen dürfen, und der erforderlichen Kraft zum Bruch des Schrankenbaumes selber, zu der ein gewisser Sicherheitsabstand gewahrt werden muss, liegen.

Außerdem muss die Druckfestigkeit des Materials die Übertragung der Kraft zum Spannen der Feder mittels eines Werkzeugs zulassen, ohne dass das Formelement 9 durch die Interaktion mit einem Werkzeug durch Deformation unbrauchbar wird.

Aus diesen Gründen sind die Scherbolzen 6 vorzugsweise aus Polyamid (PA) mit Glasfaseranteil und / oder Carbonfaseranteil oder aus Polyarylamid (PARA) mit Glasfaseranteil und / oder Carbonfaseranteil oder aus Polyphenylensulfid (PPS) mit Glasfaseranteil und / oder Carbonfaseranteil oder aus Styrol-Acrylnitril (SAN) mit Glasfaseranteil und / oder Carbonfaseranteil hergestellt.

Hierbei wird die formschlüssige Verbindung der Scherbolzen 6 mit dem ersten zu verbindenden Bauteil 5 derart hergestellt, dass die Scherbolzen 6 mit einem der Enden des Bolzenkopfes 7 voran in eine Aufnahme 11 des ersten zu verbindenden Bauteils 5 eingeführt werden; anschließend werden die Scherbolzen 6 mittels eines Werkzeugs, beispielsweise mittels eines Inbusschlüssels, um die Längsachse 10 des Bolzenkopfes 7 gedreht, um die Scherbolzen 6 jeweils in eine Arretierungsposition 12 zu bewegen.

Vorzugsweise werden die Scherbolzen 6 entlang einer Schraubenlinie 13 bzw. Rampe bis zur Arretierungsposition 12 gedreht; die Schraubenlinie 13 ist hierbei so gestaltet, dass während der Drehung eines Scherbolzens 6 das mit dem zweiten zu verbindenden Bauteil verbundene elastisch ausgeführte Element durch den Scherbolzen 6 mit steigender Kraft vorgespannt wird, so dass der Scherbolzen 6 nach erfolgter formschlüssiger Wirkverbindung in der Arretierungsposition 12 sicher gehalten werden kann.

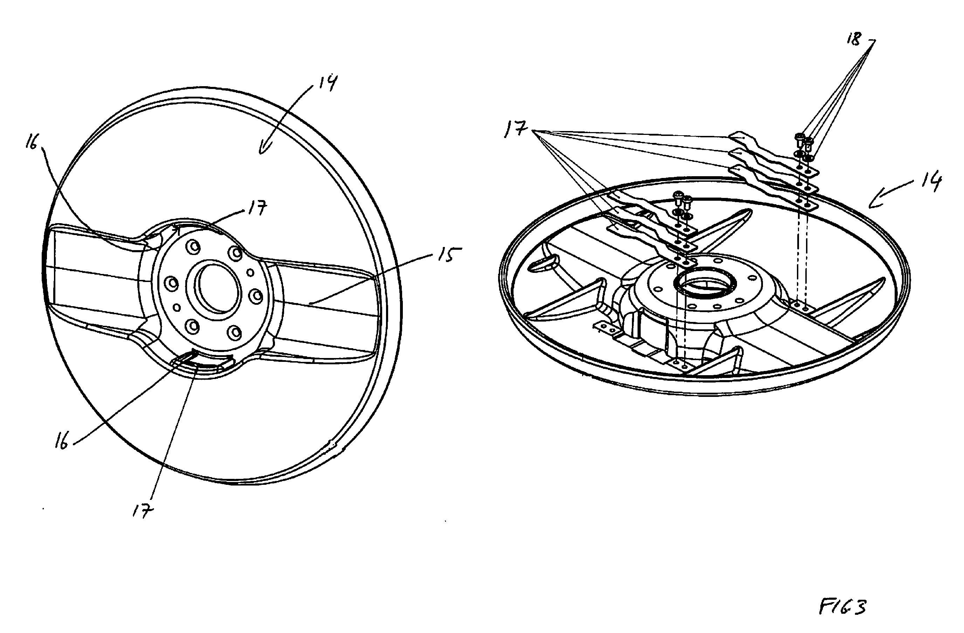

Die Schrankenkopfscheibe ist in Figur 3 gezeigt und mit dem Bezugszeichen 14 versehen. Sie umfasst an der im linken Teil der Figur 3 dargestellten Vorderseite eine Aufnahme 15 zur formschlüssigen Aufnahme des mit dem ersten Bauteil 5 verbundenen Teils des Schrankenbaums 1 in Verschwenkrichtung des Schrankenbaums 1 im montierten Zustand. Ferner weist die Schrankenkopfscheibe 14 an den nach der formschlüssigen Aufnahme des mit dem ersten Bauteil 5 verbundenen Teils des Schrankenbaums 1 der Arretierungsposition 12 der Scherbolzen 6 gegenüberliegenden Stellen jeweils eine Aufnahme 16 auf, in der jeweils eine oder mehrere Blattfeder(n) 17 angeordnet ist /(sind), über die die formschlüssige Wirkverbindung entlang einer Achse senkrecht zur Schwenkachse des Schrankenbaums im montierten Zustand und in der der Schrankenkopfscheibe abgewandten Richtung zwischen einem Scherbolzen 6 und der Schrankenkopfscheibe 14 erfolgt.

Bei dem gezeigten Beispiel sind die Blattfedern 17 mit der Schrankenkopfscheibe 14 verschraubt, wie anhand des rechten Teils der Figur 3 gezeigt; die Schrauben sind mit dem Bezugszeichen 18 versehen.

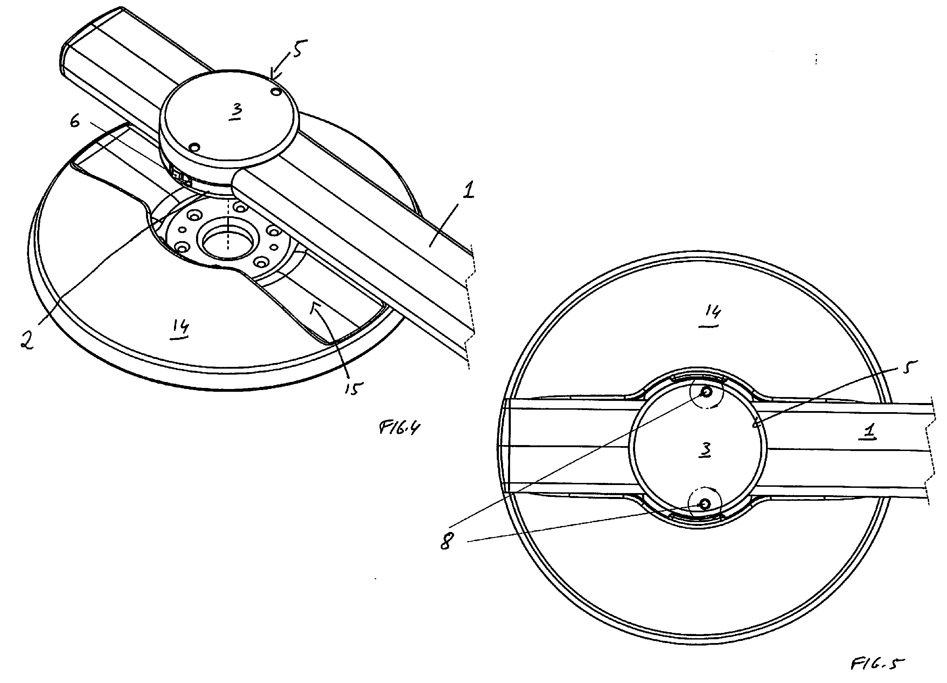

In Figur 4 sind die Schrankenbaumscheibe 14 und das mit dem ersten Bauteil 5 verbundene, der Schrankensäule einer Fahrzeugschranke zugewandte Ende eines Schrankenbaums 1 vor der Montage gezeigt. Bei dem gezeigten Beispiel sind die Scherbolzen 6 mit einem der Enden des Bolzenkopfes 7 voran in die Aufnahmen 11 des ersten zu verbindenden Bauteils 5 eingeführt; die Aufnahmen 11 sind nicht dargestellt, da sie bei dieser Ausführungsform durch die der Schrankenkopfscheibe 14 zugewandte Halbscheibe 2 gebildet werden. Die der Schrankenkopfscheibe 14 abgewandte Halbscheibe 3 weist zwei Bohrungen 19 auf, über die die Scherbolzen 6 mittels eines Inbusschlüssels um die Längsachse 10 des Bolzenkopfes 7 gedreht werden können.

In einem nächsten Schritt, der Gegenstand der Figur 5 ist, wird der mit dem ersten Bauteil 5 verbundene Teil des Schrankenbaums 1 in die dafür vorgesehene Aufnahme 15 der Schrankenkopfscheibe 14 angeordnet, wodurch eine formschlüssige Verbindung zwischen dem Schrankenbaum 1 und der Schrankenkopfscheibe 14 in Verschwenkrichtung des Schrankenbaums 1 sowie entlang einer Achse senkrecht zur Schwenkachse des Schrankenbaums und in der der Schrankenkopfscheibe 14 zugewandten Richtung realisiert wird.

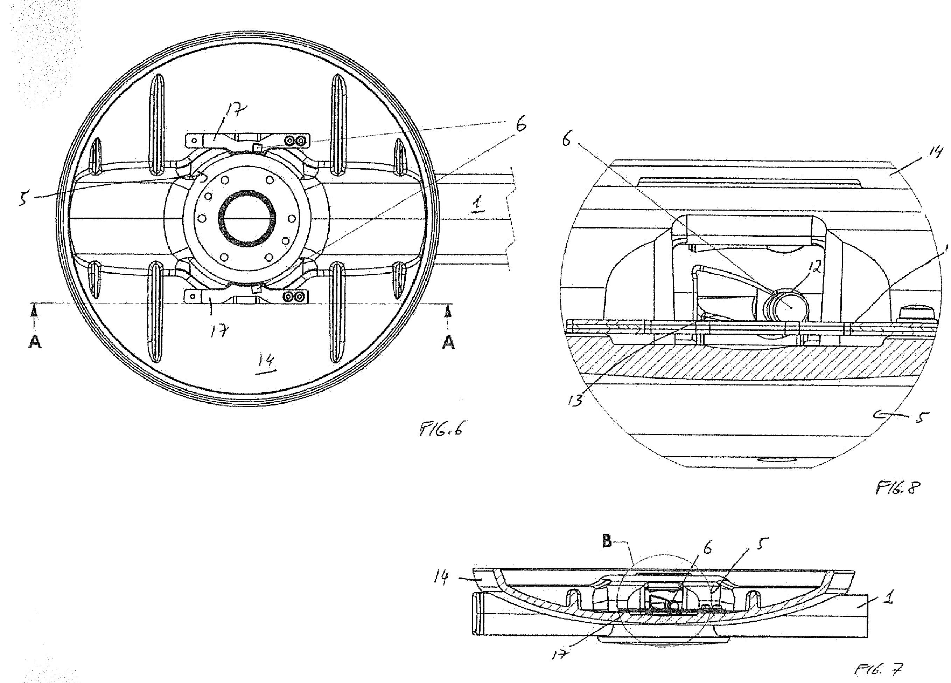

Anschließend und bezugnehmend auf Figur 6 werden die Scherbolzen 6 mittels eines Inbusschlüssels um die Längsachse 10 des Bolzenkopfes 7 gedreht, wobei, wie bereits erläutert, die Drehung der Scherbolzen 6 entlang einer Schraubenlinie bis zur Arretierungsposition erfolgt; die Arretierungsposition ist erreicht, wenn eine weitere Drehung nicht mehr möglich ist. In der Arretierungsposition ragt der Scherbolzen aus dem ersten Bauteil 5 heraus. Die Schraubenlinie ist gemäß der Erfindung so gestaltet, dass während der Drehung eines Scherbolzens 6 die mit der Schrankenkopfscheibe 14 verbundene Blattfeder 17 durch den Scherbolzen 6 mit steigender Kraft vorgespannt wird, wodurch der Scherbolzen 6 in der Arretierungsposition 12 sicher gehalten werden kann. Gleichzeitig wird mittels der Scherbolzen 6 eine formschlüssige Wirkverbindung zwischen dem ersten Bauteil 5 und der Schrankenkopfscheibe 14 entlang einer Achse senkrecht zur Schwenkachse des Schrankenbaums 1 und in der der Schrankenkopfscheibe abgewandten Richtung realisiert, wie anhand Figuren 6 und 7 veranschaulicht.

Bei der Detailansicht gemäß Figur 8 ist die Blattfeder 17 nicht verformt dargestellt.

Im Rahmen einer weiteren, nicht dargestellten Ausführungsform können die Scherbolzen mit der Schrankenkopfscheibe formschlüssig verbunden sein (die Aufnahmen für die Scherbolzen sowie die Schraubenlinien sind hierbei in der Schrankenkopfscheibe vorgesehen), wobei in diesem Fall die den Scherbolzen zugeordneten Blattfedern an dem aus den zwei Halbscheiben bestehenden Bauteil angebracht sind, welches mit dem Schrankenbaum verbunden ist.

Ferner kann das aus den zwei Halbscheiben bestehende Bauteil entfallen, wobei für den Fall, dass die Scherbolzen mit dem Schrankenbaum formschlüssig verbunden sind, die Aufnahmen und die Schraubenlinien für die Scherbolzen vorzugsweise durch Fräsen eingebracht sind. Für den Fall, dass die Scherbolzen mit der Schrankenbaumscheibe formschlüssig verbunden sind, können die am Schrankenbaum erforderlichen Aufnahmen zur Anordnung der Blattfedern ebenfalls durch Fräsen eingebracht sein.

## Patentansprüche

1. Formschlüssige Verbindung mit Abbruchfunktion in einer Richtung zwischen zwei Bauteilen aufweisend zumindest ein als Scherbolzen (6) ausgeführtes Verbindungselement, welches mit dem ersten zu verbindenden Bauteil (5) formschlüssig verbunden ist, wobei das Ende des Scherbolzens (6) über ein in Richtung der herzustellenden formschlüssigen Verbindung elastisch ausgeführtes und mit dem zweiten zu verbindenden Bauteil (14) verbundenes Bauteil (17) mit dem zweiten zu verbindenden Bauteil (14) in Richtung der herzustellenden formschlüssigen Verbindung formschlüssig wirkverbunden ist, wobei sich der Scherbolzen (6) bei hergestellter formschlüssiger Verbindung mit dem ersten zu verbindenden Bauteil (5) in einer Arretierungsposition (12) befindet, wobei bei hergestellter formschlüssiger Wirkverbindung zwischen dem Scherbolzen (6) und dem zweiten zu verbindenden Bauteil (14) der Scherbolzen (6) durch die Vorspannung des elastisch ausgeführten Bauteiles (17) in der Arretierungsposition (12) gehalten wird, **dadurch gekennzeichnet, daß**
der Scherbolzen (6) einen T-förmigen Bolzenkopf (7) aufweist, der zum formschlüssigen Zusammenwirken mit dem ersten zu verbindenden Bauteil (5) geeignet ist, wobei zumindest ein Ende des Bolzenkopfes (7) ein Formelement (9) zum formschlüssigen Verbinden mit einem Werkzeug zum Drehen des Scherbolzens (6) in Richtung senkrecht zur Längsachse (10) des Bolzenkopfes (7) aufweist, wobei die formschlüssige Verbindung des Scherbolzens (6) mit dem ersten zu verbindenden Bauteil (5) derart erfolgt, dass der Scherbolzen (6) mit einem der Enden (8) des Bolzenkopfes (7) voran in eine Aufnahme (11) des ersten zu verbindenden Bauteils (5) eingeführt wird, wobei anschließend der Scherbolzen (6) mittels eines Werkzeugs um die Längsachse (10) des Bolzenkopfes (7) gedreht wird, um den Scherbolzen (6) in die Arretierungsposition (12) zu bewegen, wobei
der Scherbolzen (6) entlang einer Schraubenlinie (13) bzw. Rampe bis zur Arretierungsposition (12) gedreht wird, wobei die Schraubenlinie (13) bzw. Rampe so gestaltet ist, dass während der Drehung des Scherbolzens (6) das elastisch ausgeführte Bauteil (17) durch den Scherbolzen (6) mit steigender Kraft vorgespannt wird, so dass der Scherbolzen in der Arretierungsposition (12) sicher gehalten werden kann.

2. Formschlüssige Verbindung mit Abbruchfunktion in einer Richtung zwischen zwei Bauteilen, nach Anspruch 1, **dadurch gekennzeichnet, dass** das elastisch ausgeführte Bauteil (17) als Blattfeder oder Zentralfeder oder als Elastomer ausgeführt ist.

3. Formschlüssige Verbindung mit Abbruchfunktion in einer Richtung zwischen zwei Bauteilen, nach einem der vorangehenden Ansprüche, **dadurch gekennzeichnet, dass** bei einer formschlüssigen Verbindung zwischen einem entlang einer definierten Länge in einer Aufnahme (15) einer Schrankenkopfscheibe (14) angeordneten Schrankenbaum (1) einer Fahrzeugschranke und der Schrankenkopfscheibe (14), welche im Bereich des Schrankenkopfs einer Schrankensäule einer Fahrzeugschranke mit der Schrankenbaumwelle direkt oder über ein Getriebe drehfest verbunden ist, entlang einer Achse senkrecht zur Schwenkachse des Schrankenbaums (1) im montierten Zustand und in der der Schrankenkopfscheibe (14) abgewandten Richtung, das erste zu verbindende Bauteil der Schrankenbaum (1) oder ein den Schrankenbaum (1) entlang einer definierten Länge entlang der Längsachse umschließendes Bauteil (5) ist, wobei das zweite zu verbindende Bauteil die Schrankenkopfscheibe (14) ist oder umgekehrt.

4. Formschlüssige Verbindung mit Abbruchfunktion in einer Richtung zwischen zwei Bauteilen, nach Anspruch 3, **dadurch gekennzeichnet, dass** das den Schrankenbaum (1) entlang einer definierten Länge entlang der Längsachse umschließende Bauteil (5) aus zwei Halbscheiben (2, 3) besteht, welche miteinander verbunden werden, das erste zu verbindende Bauteil (5) bilden und im montierten Zustand zwei diametral entgegengesetzt angeordnete Aufnahmen (11) umfassend die Schraubenlinien (13) bzw. Rampen zur Aufnahme von jeweils einem Scherbolzen (6) bilden, wobei die Schrankenkopfscheibe (14) das zweite zu verbindende Bauteil bildet und an den nach der formschlüssigen Aufnahme des Teils des Schrankenbaums (1), umfassend das erste zu verbindende Bauteil (5), in der Aufnahme (15) der Arretierungsposition (12) der Scherbolzen (6) gegenüberliegenden Stellen jeweils eine Aufnahme (16) aufweist, in der jeweils ein elastisch ausgeführtes Bauteil (17) angeordnet ist, über das die formschlüssige Wirkverbindung zwischen dem Scherbolzen (6) und der Schrankenkopfscheibe (14) erfolgt.

5. Formschlüssige Verbindung mit Abbruchfunktion in einer Richtung zwischen zwei Bauteilen, nach Anspruch 4, **dadurch gekennzeichnet, dass** die zwei Halbscheiben (2, 3) durch Gießen hergestellt sind.

6. Formschlüssige Verbindung mit Abbruchfunktion in einer Richtung zwischen zwei Bauteilen, nach einem der vorangehenden Ansprüche, **dadurch gekennzeichnet, dass** die Sollbruchstelle des zumindest einen Scherbolzens (6) axial betrachtet nach dem letzten Berührungspunkt mit dem ersten zu verbindenden Bauteil (5) vorgesehen ist.

7. Formschlüssige Verbindung mit Abbruchfunktion in einer Richtung zwischen zwei Bauteilen, nach einem der vorangehenden Ansprüche, **dadurch gekennzeichnet, dass** die Scherbolzen (6) aus Polyamid (PA) mit Glasfaseranteil und / oder Carbonfaseranteil oder aus Polyarylamid (PARA) mit Glasfaseranteil und / oder Carbonfaseranteil oder Polyphenylensulfid (PPS) mit Glasfaseranteil und / oder Carbonfaseranteil oder aus Styrol-Acrylnitril (SAN) mit Glasfaseranteil und / oder Carbonfaseranteil hergestellt sind.

## Claims

1. A positive connection with abort function in a direction between two components exhibiting at least one connecting element designed as a shear bolt (6), which is positively connected with the first component (5) to be joined, wherein a component (17) that has an elastic design in the direction of the positive connection to be established and is connected with the second component (14) to be joined is used to positively operatively connect the end of the shear bolt (6) with the second component (14) to be joined in the direction of the positive connection to be established, wherein the shear bolt (6) is in a locked position (12) given an established positive connection with the first component (5) to be joined, wherein the shear bolt (6) is held in the locked position (12) by the preload of the elastically designed component (17) given an established positive operative connection between the shear bolt (6) and the second component (14) to be joined, **characterized in that** the shear bolt (6) exhibits a T-shaped bolt head (7) that is suitable for positively interacting with the first component (5) to be joined, wherein at least one end of the bolt head (7) exhibits a form element (9) to be positively connected with a tool for turning the shear bolt (6) in a direction perpendicular to the longitudinal axis (10) of the bolt head (7), wherein the shear bolt (6) is positively connected with the first component (5) to be joined in such a way that the shear bolt (6) with one of the ends (8) of the bolt head (7) is first introduced into a receptacle (11) of the first component (5) to be joined, wherein the shear bolt (6) is then turned around the longitudinal axis (10) of the bolt head (7) by means of a tool, so as to move the shear bolt (6) into the locked position (12), wherein the shear bolt (6) is turned along a helix (13) or ramp up until the locked position (12), wherein the helix (13) or ramp is designed in such a way that, as the shear bolt (6) turns, the shear bolt (6) preloads the elastically designed component (17) with an increasing force, so that the shear bolt can be reliably held in the locked position (12)

2. The positive connection with abort function in a direction between two components according to claim 1, **characterized in that** the elastically designed component (17) takes the form of a leaf spring or central spring or an elastomer.

3. The positive connection with abort function in a direction between two components according to one of the preceding claims, **characterized in that**, given a positive connection between a barrier boom (1) of a vehicle barrier arranged along a defined length in a receptacle (15) of a barrier head panel (14) and the barrier head panel (14), which is connected directly or by way of a gearbox in a torsion-proof manner with the barrier boom shaft in the area of the barrier head of a barrier column of a vehicle barrier, along an axis perpendicular to the pivoting axis of the barrier boom (1) in the assembled state and in the direction away from the barrier head panel (14), the first component is the barrier boom (1) or a component (5) that envelops the barrier boom (1) along a defined length along the longitudinal axis, wherein the second component to be joined is the barrier head panel (14) or vice versa.

4. The positive connection with abort function in a direction between two components according to claim 3, **characterized in that** the component (5) enveloping the barrier boom (1) along a defined length along the longitudinal axis consists of two half-panels (2, 3), which are connected with each other, form the first component (5) to be joined, and in the assembled state form two diametrically opposed receptacles (11) encompassing the helixes (13) or ramps for accommodating a respective shear bolt (6), wherein the barrier head panel (14) forms the second component to be joined, and, at the locations lying opposite the locked position (12) of the shear bolt (6) after the part of the barrier boom (1) comprising the first component (5) to be joined has been positively accommodated in the receptacle (15), exhibits a respective receptacle (16) in which a respective elastically designed component (17) is situated, which is used to establish the positive operative connection between the shear bolt (6) and barrier head panel (14).

5. The positive connection with abort function in a direction between two components according to claim 4, **characterized in that** the two half-panels (2, 3) are manufactured via casting.

6. The positive connection with abort function in a direction between two components according to one of the preceding claims, **characterized in that**, viewed axially, the predetermined breaking point of the at least one shear bolt (6) is provided after the last point of contact with the first component (5) to be joined.

7. The positive connection with abort function in a direction between two components according to one of the preceding claims, **characterized in that** the shear bolts (6) are made out of polyamide (PA) with a glass fiber percentage and/or carbon fiber percentage, or out of polyacrylamide (PARA) with a glass fiber percentage and/or carbon fiber percentage, or out of polyphenylene sulfide (PPS) with a glass fiber percentage and/or carbon fiber percentage, or out of styrene acrylonitrile (SAN) with a glass fiber percentage and/or carbon fiber percentage.

## Revendications

1. Assemblage par complémentarité de forme avec fonction de rupture dans une direction entre deux éléments de construction, comportant au moins un élément d'assemblage réalisé en tant que boulon de cisaillement (6), lequel est assemblé par complémentarité de forme avec le premier élément de construction (5) qui doit être assemblé, l'extrémité du boulon de cisaillement (6) étant reliée en interaction, par complémentarité de forme, en direction de l'assemblage par complémentarité de forme qui doit être établi avec le deuxième élément de construction (14) qui doit être assemblé, par l'intermédiaire d'un élément de construction (17) réalisé de manière élastique en direction de l'assemblage par complémentarité de forme qui doit être établi et assemblé avec le deuxième élément de construction (14) qui doit être assemblé, lorsque l'assemblage par complémentarité de forme est établi, le boulon de cisaillement (6) se trouvant avec le premier élément de construction (5) qui doit être assemblé dans une position de blocage (12), lorsque la liaison interactive par complémentarité de forme est établie entre le boulon de cisaillement (6) et le deuxième élément de construction (14) qui doit être assemblé, le boulon de cisaillement (6) étant maintenu dans la position de blocage (12) par la précontrainte de l'élément de construction (17) réalisé en étant élastique, **caractérisé en ce que** de boulon de cisaillement (6) comporte une tête de boulon (7) en forme de T, qui est adaptée pour l'interaction par complémentarité de forme avec le premier élément de construction (5) qui doit être assemblé, au moins une extrémité de la tête de boulon (7) comportant un élément moulé (9) pour l'assemblage par complémentarité de forme avec un outil destiné à faire tourner le boulon de cisaillement (6) dans la direction à la perpendiculaire de l'axe longitudinal (10) de la tête de boulon (7), l'assemblage par complémentarité de forme du boulon de cisaillement (6) avec le premier élément de construction (5) qui doit être assemblé s'effectuant de telle sorte qu'on introduit le boulon de cisaillement (6) avec l'une des extrémités (8) de la tête de boulon (7) en avant dans un logement (11) du premier élément de construction (5) qui doit être assemblé, alors qu'ensuite, on fait tourner le boulon de cisaillement (6) au moyen d'un outil autour de l'axe longitudinal (10) de la tête de boulon (7), pour déplacer le boulon de cisaillement (6) dans la position de blocage (12), alors qu'on fait tourner le boulon de cisaillement (6) le long d'une ligne d'hélice (13) ou rampe jusqu'à la position de blocage (12), la ligne d'hélice (13) ou la rampe étant conçue de telle sorte que pendant la rotation du boulon de cisaillement (6), l'élément de construction (17) réalisé en étant élastique soit précontraint avec une force croissante par le boulon de cisaillement (6), de sorte que le boulon de cisaillement puisse être maintenu en toute sécurité dans la position de blocage (12).

2. Assemblage par complémentarité de forme avec fonction de rupture dans une direction entre deux éléments de construction selon la revendication 1, **caractérisé en ce que** l'élément de construction (17) réalisé en étant élastique est réalisé en tant que ressort à lames ou en tant que ressort central ou en tant qu'élastomère.

3. Assemblage par complémentarité de forme avec fonction de rupture dans une direction entre deux éléments de construction selon l'une quelconque des revendications précédentes, **caractérisé en ce que** lors d'un assemblage par complémentarité de forme entre une flèche (1) d'une barrière pour véhicules placée le long d'une longueur définie dans un logement (15) d'un disque de tête (14) de barrière et du disque de tête (14) de la barrière, lequel dans la région de la tête de barrière d'une colonne de barrière d'une barrière de véhicule est relié de manière solidaire en rotation, directement ou via une transmission avec un arbre de barrière, le long d'un axe à la perpendiculaire de l'axe de pivotement de l'arbre (1) de barrière, en position montée et dans la direction opposée au disque de tête (14) de la barrière, le premier élément de construction qui doit être assemblé étant l'arbre (1) de barrière ou un élément de construction (5) entourant l'arbre (1) de barrière le long d'une longueur définie le long de l'axe longitudinal, le deuxième élément de construction qui doit être assemblé étant le disque de tête (14) de la barrière ou inversement.

4. Assemblage par complémentarité de forme avec fonction de rupture dans une direction entre deux éléments de construction selon la revendication 3, **caractérisé en ce que** l'élément de construction (5) entourant l'arbre (1) de barrière le long d'une longueur définie le long de l'axe longitudinal est constitué de deux demis disques (2, 3), qui assemblés entre eux, forment le premier élément de construction (5) qui doit être assemblé et en position montée forment deux logements (11) placés en opposition diamétrale, comprenant les lignes d'hélice (13) ou rampes pour le logement de chaque fois un boulon de cisaillement (6), le disque de tête (14) de la barrière formant le deuxième élément de construction qui doit être assemblé et sur les endroits opposés à la position de blocage (12) des boulons de cisaillement (6), après le logement par complémentarité de forme de la partie de l'arbre (1) de barrière comprenant le premier élément de construction (5) qui doit être assemblé dans le logement (15) comportant chaque fois un logement (16) dans lequel est placé chaque fois un élément de construction (17) réalisé en étant élastique, par l'intermédiaire duquel s'effectue l'assemblage par complémentarité de forme entre le boulon de cisaillement (6) et le disque de tête (14) de la barrière.

5. Assemblage par complémentarité de forme avec fonction de rupture dans une direction entre deux éléments de construction selon la revendication 4, **caractérisé en ce que** les deux demis disques (2, 3) sont fabriqué par coulée.

6. Assemblage par complémentarité de forme avec fonction de rupture dans une direction entre deux éléments de construction selon l'une quelconque des revendications précédentes, **caractérisé en ce que**, considéré en direction axiale, le point de rupture théorique de l'au moins un boulon de cisaillement (6) est prévu après le dernier point de contact avec le premier élément de construction (5) qui doit être assemblé.

7. Assemblage par complémentarité de forme avec fonction de rupture dans une direction entre deux éléments de construction selon l'une quelconque des revendications précédentes, **caractérisé en ce que** les boulons de cisaillement (6) sont fabriqués en polyamide (PA) avec une part de fibres de verre et/ou une part de fibres de carbone ou en polyarylamide (PARA) avec une part de fibres de verre et/ou une part de fibres de carbone ou en (poly) sulfure de phénylène (PPS) avec une part de fibres de verre et/ou une part de fibres de carbone ou en styrène acrylonitrile (SAN) avec une part de fibres de verre et/ou une part de fibres de carbone.
